# EUROPEAN PATENT SPECIFICATION

(11) **EP 3 279 360 B1**
(45) Date of publication and mention of the grant of the patent: **09.10.2019**
(21) Application number: 16773270.0
(22) Date of filing: 31.03.2016
(51) Int. Cl.: C22C 38/00, C21D 1/06, C22C 38/60, C21D 6/00, C21D 1/76, C22C 38/02, C22C 38/04, C22C 38/26, C22C 38/28, C22C 38/38, F16H 55/06, C23C 8/22, C22C 38/34, C22C 38/42, C22C 38/44, C22C 38/46, C22C 38/48, C22C 38/50, C22C 38/52, C22C 38/54, C22C 38/58

(54) **CASE-HARDENED STEEL COMPONENT**
EINSATZGEHÄRTETES STAHLKOMPONENTE
CONSTIUANT EN ACIER CÉMENTÉ

(30) Priority: 31.03.2015 JP 2015070701
(43) Date of publication of application: 07.02.2018
(73) Proprietor: Nippon Steel Corporation, Tokyo (JP)
(72) Inventor: KOYAMA, Tatsuya, Tokyo 100-8071 (JP); KUBOTA, Manabu, Tokyo 100-8071 (JP)
(74) Representative: Vossius & Partner Patentanwälte Rechtsanwälte mbB
(86) International application number: PCT/JP2016/061633
(87) International publication number: WO 2016/159391

(56) References cited:
- JP-A- H1 030 151
- JP-A- H09 256 054
- JP-A- H11 101 328
- JP-A- 2003 183 773
- JP-A- 2005 200 667
- JP-A- 2005 240 175
- JP-A- 2009 293 070
- JP-A- 2010 059 484
- JP-A- 2010 163 666

## Description

### [Technical Field of the Invention]

The present invention relates to a case-hardened steel component.

Priority is claimed on Japanese Patent Application No. 2015-070701, filed on March 31, 2015, the content of which is incorporated herein by reference.

### [Related Art]

There may be cases where a component for machine structural use is broken by suddenly receiving high stress. In particular, in a gear for a vehicle such as a differential gear, a transmission gear, and a carburized shaft with a gear, the root of the tooth may be broken by impact fracture due to a load during sudden acceleration and sudden stop of the vehicle. In order to prevent such a phenomenon, particularly in a differential gear and a transmission gear, the improvement in the impact value thereof (impact resistance) is more desirable. By sufficiently improving the impact value of such a component for machine structural use, the amount of the materials used for the component for machine structural use can be decreased, and a reduction in the weight of the component for machine structural use can be achieved.

It is generally known that grain refining is effective in improving the impact value. Grain refining can be realized by forming a large amount of fine precipitates in steel.

A technique in the related art for precipitating a large amount of fine precipitates in steel will be described below. For example, Patent Document 1 proposes a technique for dispersing AlN or AlN and Nb(CN) in steel in order to prevent grain coarsening during carburizing. However, since AlN has low thermal stability, AlN is easily solutionized in steel and coarsened, thereby forming coarser precipitates than other precipitates formed in the steel. Therefore, AlN has an insufficient effect on grain refining. In addition, Nb necessary for forming Nb(CN), while being capable of forming fine Nb(CN) in steel, reduces the hot ductility of steel and causes the occurrence of flaws during casting and hot rolling. Therefore, it is not preferable to include a large amount of Nb.

Patent Document 2 proposes a technique for obtaining fine AlN during carburizing by reducing the amount of AlN precipitated after hot forging. However, since AlN has low thermal stability and is easily coarsened, the grain refining effect is insufficient.

As described above, the techniques disclosed in Patent Documents 1 and 2 cannot satisfactorily meet the demand for a case-hardened steel component having an excellent impact value and high hot ductility. Other previously proposed arrangements are disclosed in JPH1030151A.

### [Prior Art Literature]

### [Patent Literature]

[Patent Document 1] Japanese Patent No. 3738004[Patent Document 2] Japanese Patent No. 3954772

### [Disclosure of the Invention]

### [Problems to be Solved by the Invention]

In view of the above problems, an object of the present invention is to provide a case-hardened steel component which is excellent in impact resistance without impairing manufacturability.

### [Means for Solving the Problem]

The gist of the present invention is as follows.
(1) According to an aspect of the present invention, a case-hardened steel component includes: a base metal; and a carburized layer, in which a chemical composition of the base metal includes, by mass%, C: 0.16% to 0.30%, Si: 0.10% to 2.00%, Mn: 0.30% to 2.00%, Cr: 0.20% to 3.00%, S: 0.001% to 0.100%, N: 0.003% to 0.010%, Ti: 0.020% to 0.200%, Nb: 0.010% or more and less than 0.050%, B: 0.0005% to 0.0050%, Ni: 0% to 3.00%, Mo: 0% to 0.80%, Cu: 0% to 1.00%, Co: 0% to 3.00%, W: 0% to 1.00%, V: 0% to 0.30%, Pb: 0% to 0.50%, Ca: 0% to 0.0100%, Mg: 0% to 0.0100%, Zr: 0% to 0.0500%, Te: 0% to 0.1000%, a rare earth metal: 0% to 0.0050%, Al: limited to 0.010% or less, O: limited to 0.0050% or less, P: limited to 0.025% or less, and Fe and impurities as a remainder, a number density of Ti-based precipitates having an equivalent circle diameter of 5 to 50 nm in a surface region from a surface to a depth of 0.1 mm is 0.5 pieces/µm² or more, and in the surface region, a number density of AlN having an equivalent circle diameter of 50 nm or more and 100 nm or less is 0.5 pieces/µm² or less.(2) In the case-hardened steel component according to (1), the chemical composition of the base metal may include, by mass%, one or two or more selected from the group consisting of Ni: 0 .20 % or more and 3.00% or less, Mo: 0.05 % or more and 0.80% or less, Cu: 0.05 % or more and 1.00% or less, Co: 0.05 % or more and 3.00% or less, W: 0.05 % or more and 1.00% or less, and V: 0.10 % or more and 0.30% or less.
(3) In the case-hardened steel component according to (1) or (2), the chemical composition of the base metal may include, by mass%, one or two or more selected from the group consisting of Pb: 0.05 % or more and 0.50% or less, Ca: 0 .0003 % or more and 0.0100% or less, Mg: 0 .0005 % or more and 0.0100% or less, Zr: 0.0005% or more and 0.0500% or less, Te: 0.0005 % or more and 0.1000% or less, and a rare earth metal: 0.0005 % or more and 0.0050% or less.

### [Effects of the Invention]

According to the aspect of the present invention, it is possible to provide a case-hardened steel component having excellent impact resistance. The case-hardened steel component causes a reduction in the amount of materials used for a component for machine structural use and contributes to a reduction in the weight of the component for machine structural use. Therefore, the industrial effect of the present invention is extremely large.

### [Brief Description of the Drawings]

FIG. 1 is a conceptual view of the carburized layer of a case-hardened steel component according to an embodiment.FIG. 2 is a conceptual view of the carburized layer of a case-hardened steel component obtained from steel having an excessive amount of Al.FIG. 3 is a conceptual view of the carburized layer of a case-hardened steel component obtained by an inappropriate carburizing treatment.FIG. 4 is a graph showing a temperature change during a carburizing treatment.

FIG. 5 is a side view of a test piece used to evaluate an impact value ratio.

### [Embodiments of the Invention]

The inventors examined a method of realizing a case-hardened steel component having excellent impact resistance by allowing precipitates having high thermal stability to be present on the surface layer of a steel component without impairing manufacturability. Specifically, gas carburizing and an impact test were conducted on steel widely and systematically varied in chemical composition and carburizing material properties. As a result, the following findings were obtained.

The inventors investigated the relationship between the grain size after carburizing and precipitates in steel. As a result, it was found that the factors that control the effect of refining grain sizes after carburizing by precipitates in the steel are the distribution state of the precipitates at the time of reverse transformation to γ during heating in gas carburizing, that is, at the time of raising a temperature to 700°C to 800°C, and the stability of the precipitates at the time of temperature retention during carburizing heating.

Furthermore, the inventors found that N₂ gas contained in the carburizing gas atmosphere decomposes during heating in gas carburizing, and N is introduced into the steel and affects the behavior during reverse transformation to γ. In order to investigate a method of refining grains by utilizing the introduced N, the inventors conducted intensive investigations on the influence of chemical compositions and carburizing heating conditions. As a result, the inventors found that in a case where Al is contained in steel in an amount of more than 0.010%, the introduced N reacts with Al to form coarse AlN, and in a case where the Al content in the steel is 0.010% or less and the Ti content in the steel is 0.020% or more, N introduced into the steel does not form coarse AlN and thus grains are refined, leading to the improvement in an impact value.

The inventors presumed that the above-described phenomenon occurs because AlN hinders the grain refining effect of Ti-based precipitates such as TiC, (Ti,Nb)(C,N), TiN, and Ti₄C₂S₂, particularly Ti-based precipitates primarily formed of Ti and N. Furthermore, the inventors found that in a case where the average temperature rising rate in a range of 700°C to 800°C is 5 to 50 °C/min, the diameter and number density of the Ti-based precipitates and coarse AlN are optimized and thus the grains can be refined.

In addition, the inventors found that a reduction in the hot ductility due to Nb can be suppressed by limiting the Nb content to less than 0.050% and setting the Ti content to 0.020% or more.

Hereinafter, a case-hardened steel component according to an embodiment of the present invention based on the above-described findings (a case-hardened steel component according to this embodiment) will be described in detail.

The case-hardened steel component according to this embodiment includes a base metal and a carburized layer. The case-hardened steel component according to this embodiment is obtained by processing steel having a predetermined chemical composition and performing gas carburizing on the steel.

The reason for limiting the chemical composition of the base metal of the case-hardened steel component according to this embodiment will be described. The chemical composition of the base metal is the same as that of the steel before processing. Hereinafter, "%" which is a unit associated with the amount of an alloying element represents "mass%".

### (C: 0.16% to 0.30%)

The C content determines the strength of the core part (base metal) of the case-hardened steel component and also affects the effective case depth. In order to secure the required core part strength, the lower limit of the C content is set to 0.16%. On the other hand, when the C content is excessive, the efficiency of cutting and cold working decreases. Therefore, the upper limit of the C content is set to 0.30%. A preferable lower limit of the C content is 0.18%, and a more preferable lower limit thereof is 0.19%. A preferable upper limit of the C content is 0.26%, and a more preferable upper limit thereof is 0.24%.

### (Si: 0.10% to 2.00%)

Si is an element effective in deoxidizing steel and is an element effective in improving the hardenability of the steel and securing the strength required for a component for machine structural use. When the Si content is less than 0.10%, the effect is insufficient. On the other hand, when the Si content exceeds 2.00%, decarburization at the time of production becomes significant and the strength and effective case depth of the carburized steel component (case-hardened steel component) become insufficient. For the above reasons, it is necessary to set the Si content to be in a range of 0.10% to 2.00%. A preferable lower limit of the Si content is 0.15%, and a more preferable lower limit thereof is 0.20%. A preferable upper limit of the Si content is 1.00%, and a more preferable upper limit thereof is 0.50%.

### (Mn: 0.30% to 2.00%)

Mn is an element effective in deoxidizing steel and is an element effective in increasing the hardenability and imparting necessary strength to the steel. Mn combines with S to form MnS in the steel and has an effect of improving the machinability. When the Mn content is less than 0.30%, this effect is insufficient. On the other hand, when the Mn content exceeds 2.00%, the retained austenite is stably present in the steel, and the strength of the steel decreases. For the above reasons, it is necessary to set the Mn content to be in a range of 0.30% to 2.00%. A preferable lower limit of the Mn content is 0.35%, and a more preferable lower limit thereof is 0.40%. A preferable upper limit of the Mn content is 1.50%, and a more preferable upper limit thereof is 1.20%.

### (Cr: 0.20% to 3.00%)

Cr is an element effective in increasing the hardenability and imparting the necessary strength to steel. When the Cr content is less than 0.20%, the effect is insufficient. On the other hand, when the Cr content exceeds 3.00%, the effect is saturated. For the above reasons, it is necessary to set the Cr content to be in a range of 0.20% to 3.00%. A preferable lower limit of the Cr content is 0.50%, and a more preferable lower limit thereof is 0.80%. A preferable upper limit of the Cr content is 2.20%, and a more preferable upper limit thereof is 2.00%.

### (S: 0.001% to 0.100%)

S forms MnS in steel, thereby improving the machinability of the steel. When the S content is less than 0.001%, the effect is insufficient. On the other hand, when the S content exceeds 0.100%, not only is the effect saturated, but also S is segregated to grain boundaries and causes boundary embrittlement. For the above reasons, it is necessary to set the S content to be in a range of 0.001% to 0.100%. A preferable lower limit of the S content is 0.010%, and a more preferable lower limit thereof is 0.013%. A preferable upper limit of the S content is 0.050%, and a more preferable upper limit thereof is 0.040%.

### (N: 0.003% to 0.010%)

N bonds to Ti, Nb, V, and the like in steel to form coarse nitrides during solidification in a steel casting process. These coarse nitrides act as fracture origins when present in a large amount. Therefore, it is necessary to reduce the N content to 0.010% or less. The Ti-based precipitates included in the surface part of the case-hardened steel component according to this embodiment are primarily formed by N introduced into the steel during the carburizing treatment, and are not formed by N contained in the steel before the carburizing treatment. Therefore, it is not necessary for the base metal of the case-hardened steel component according to this embodiment to contain N. However, reducing the N content to less than 0.003% increases manufacturing costs. Therefore, the lower limit of the N content may be 0.003%. The lower limit of the N content may be 0.0035% or 0.004%. A preferable upper limit of the N content is 0.009%, and a more preferable upper limit thereof is 0.008%.

### (Ti: 0.020% to 0.200%)

Ti produces Ti-based precipitates such as fine TiC, TiN, Ti(CN), and TiCS in steel and contributes to grain refining. In addition, Ti bonds to C and N introduced into the steel during the carburizing treatment to produce Ti-based precipitates primarily formed of Ti, C, and/or N, and thus contributes to grain refining. Furthermore, Ti has an effect of improving a reduction of the hot ductility due to Nb. These effects are insufficient when the Ti content is less than 0.020%. On the other hand, when the Ti content exceeds 0.200%, the effects are saturated. For the above reasons, it is necessary to set the Ti content to be in a range of 0.020% to 0.200%. A preferable lower limit of the Ti content is 0.025%, and a more preferable lower limit thereof is 0.030%. A preferable upper limit of the Ti content is 0.180%, and a more preferable upper limit thereof is 0.160%.

### (Nb: 0.010% or More and Less Than 0.050%)

Nb is solutionized into Ti-based precipitates, contributes to an increase in the amount of precipitates and refining of precipitates, and promotes grain refining. This effect is insufficient when the Nb content is less than 0.010%. In order to obtain this effect, the Nb content is set to 0.010% or more. A preferable lower limit of the Nb content is 0.012%, and a more preferable lower limit thereof is 0.015%. On the other hand, Nb decreases hot ductility and thus reduces the productivity of steel. A reduction in the hot ductility due to Nb can be suppressed by including 0.020% or more of Ti like the base metal of the steel according to this embodiment. However, even when the Ti content is 0.020% or more, if the Nb content is 0.050% or more, the hot ductility of the steel decreases, which causes flaws during casting and hot rolling. Therefore, it is necessary to set the Nb content to be less than 0.050%. A preferable upper limit of the Nb content is 0.040%, and a more preferable upper limit thereof is 0.030%.

### (B: 0.0005% to 0.0050%)

B has a function of suppressing boundary segregation of P. B also has an effect of improving intergranular strength and intragranular strength and an effect of improving hardenability. These effects consequently improve the impact value of the steel. These effects cannot be sufficiently obtained when the B content is less than 0.0005%. On the other hand, when the B content exceeds 0.0050%, the effects are saturated. For the above reasons, the B content is set to be in a range of 0.0005% to 0.0050%. The lower limit of the B content is preferably 0.0010%, and more preferably 0.0013%. The upper limit of the B content is preferably 0.0045%, and more preferably 0.0040%.

### (Al: 0.010% or Less)

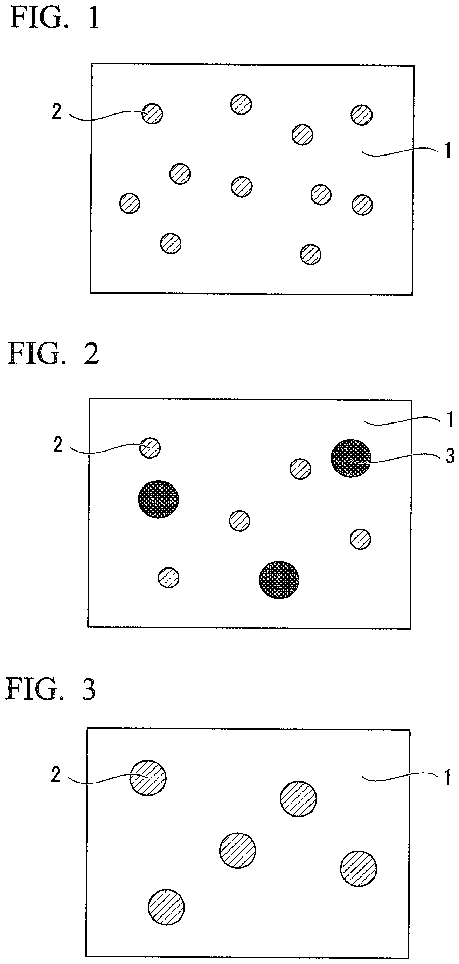

Al usually becomes AlN and precipitates in steel. However, in the case-hardened steel component according to this embodiment, Al coexists with Ti to form a solid solution in the steel. The Al content (that is, the Al content of the base metal) of the steel before the carburizing treatment significantly influences the properties of the carburized layer. As shown in FIG. 1, a carburized layer 1 of the case-hardened steel component according to this embodiment has fine Ti-based precipitates 2 having a diameter (equivalent circle diameter) of 5 to 50 nm. The Ti-based precipitates 2 are formed by C and N introduced into the steel from the carburizing gas atmosphere during heating in gas carburizing. However, when the Al content of the steel before the carburizing treatment exceeds 0.010%, as shown in FIG. 2, during heating in gas carburizing, N and Al introduced from the carburizing gas atmosphere combine together to form relatively coarse AlN 3. In the case where the coarse AlN 3 is formed, the grain refining effect cannot be sufficiently obtained. Therefore, it is necessary to limit the Al content to 0.010% or less. The upper limit of the Al content is preferably 0.009%, and more preferably 0.007%. Since it is preferable that the Al content is small, the lower limit of the Al content is 0%.

### (O: 0.0050% or Less)

O forms oxides in steel. There may be cases where the oxides undergo boundary segregation and cause boundary embrittlement. In addition, O is an element which forms hard oxide-based inclusions in steel and makes it easier for brittle fracture to occur. Therefore, it is necessary to limit the O content to 0.0050% or less. A preferable upper limit of the O content is 0.0030%, and a more preferable upper limit thereof is 0.0025%. Since it is preferable that the O content is small, the lower limit of the O content is 0%.

### (P: 0.025% or Less)

P segregates to austenite grain boundaries during carburizing, thereby causing boundary fracture. That is, P is an element which decreases the impact value of a carburized steel component. Therefore, it is necessary to limit the P content to 0.025% or less. A preferable upper limit of the P content is 0.022% or less, and a more preferable upper limit thereof is 0.020%. Since it is preferable that the P content is small, the lower limit of the P content is 0%. However, in a case where P is removed more than necessary, manufacturing costs increase. Therefore, the substantially lower limit of the P content is usually about 0.004%.

The chemical composition of the base metal of the case-hardened steel component according to this embodiment basically consists of the above-mentioned elements, Fe, and impurities. However, in order to increase the hardenability or impact value, instead of a portion of Fe, one or two or more selected from the group consisting of Ni, Mo, Cu, Co, W, and V may be further contained. In addition, instead of a portion of Fe, one or two or more selected from the group consisting of Pb, Ca, Mg, Zr, Te, and rare earth metals (REM) may be contained. However, any of Ni, Mo, Cu, Co, W, V, Pb, Ca, Mg, Zr, Te, and rare earth metals (REM) is an arbitrary element, and may not be contained in the base metal of the case-hardened steel component according to this embodiment. That is, the lower limit of Ni, Mo, Cu, Co, W, V, Pb, Ca, Mg, Zr, Te and the rare earth metals (REM) is 0%, but may also be more than 0%.

### (Ni: 0% to 3.00%)

Ni is an element effective in improving the hardenability and impact value of steel. In a case where Ni is contained to obtain the above-described effect, a preferable lower limit of the Ni content is 0.20%, and a more preferable lower limit thereof is 0.50%. On the other hand, when the Ni content exceeds 3.00%, the retained austenite is stably present in the steel and the strength of the steel decreases. Therefore, even in a case where Ni is contained, the upper limit of the Ni content is set to 3.00%. The upper limit of the Ni content is preferably 2.00%, and more preferably 1.80%.

### (Mo: 0% to 0.80%)

In addition to increasing the hardenability of steel, Mo suppresses segregation of P to grain boundaries. Therefore, Mo is an element effective in improving the impact value of the steel. In a case where Mo is contained to obtain the above-described effect, a preferable lower limit of the Mo content is 0.05%, and a more preferable lower limit thereof is 0.10%. On the other hand, when the Mo content exceeds 0.80%, the effect is saturated. Therefore, even in a case where Mo is contained, the upper limit of the Mo content is set to 0.80%.

### (Cu: 0% to 1.00%)

Cu is an element effective in improving the hardenability of steel. In a case where Cu is contained to obtain the above-described effect, the lower limit of the Cu content is preferably 0.05%, and more preferably 0.10%. On the other hand, when the Cu content exceeds 1.00%, the hot ductility decreases. Therefore, even in a case where Cu is contained, the upper limit of the Cu content is set to 1.00%.

### (Co: 0% to 3.00%)

Co is an element effective in improving the hardenability of steel. In a case where Co is contained to obtain the above-described effect, the lower limit of the Co content is preferably 0.05%, and more preferably 0.10%. On the other hand, when the Co content exceeds 3.00%, the effect is saturated. Therefore, even in a case where Co is contained, the upper limit of the Co content is set to 3.00%.

### (W: 0% to 1.00%)

W is an element effective for improving the hardenability of steel. In a case where W is contained to obtain the above-described effect, the lower limit of the W content is preferably 0.05%, and more preferably 0.10%. On the other hand, when the W content exceeds 1.00%, the effect is saturated. Therefore, even in a case where W is contained, the upper limit of the W content is set to 1.00%.

### (V: 0% to 0.30%)

V is solutionized into Ti-based precipitates, contributes to an increase in the amount of precipitates and refining of precipitates, and promotes grain refining. In a case where V is contained to obtain the above-described effect, a preferable lower limit of the V content is 0.10%, and a more preferable lower limit thereof is 0.20%. On the other hand, when the V content exceeds 0.30%, the precipitates become coarse during gas carburizing and the grains are coarsened. Therefore, even in a case where V is contained, the upper limit of the V content is set to 0.30%.

### (Pb: 0% to 0.50%)

Pb is an element which is melted and embrittled during cutting and thus improves the machinability of steel. In a case where Pb is contained to obtain the above-described effect, a preferable lower limit of the Pb content is 0.05%, and a more preferable lower limit thereof is 0.10%. On the other hand, when Pb is contained excessively, the manufacturability decreases. Therefore, even in a case where Pb is contained, the upper limit of the Pb content is set to 0.50%.

### (Ca: 0% to 0.0100%)

Ca has an effect of decreasing the melting point of oxides. Since Ca oxides are softened by temperature rise during cutting and thus improve the machinability of the steel. In a case where Ca is contained to obtain the above-described effect, a preferable lower limit of the Ca content is 0.0003%, and a more preferable lower limit thereof is 0.0005%. On the other hand, when the Ca content exceeds 0.0100%, a large amount of CaS is produced, resulting in a decrease in the machinability. Therefore, even in a case where Ca is contained, the upper limit of the Ca content is set to 0.0100%.

### (Mg: 0% to 0.0100%)

Mg is a deoxidizing element and produces oxides in steel. Furthermore, Mg-based oxides formed by Mg tend to be a nucleus of crystallization and/or precipitation of MnS. In addition, Mg sulfides become complex sulfides of Mn and Mg such that MnS is spheroidized. As described above, Mg is an element effective in controlling the dispersion of MnS and improving the machinability of the steel. In a case of obtaining these effects, a preferable lower limit of the Mg content is 0.0005%, and a more preferable lower limit thereof is 0.0010%. On the other hand, when the Mg content exceeds 0.0100%, a large amount of MgS is produced, resulting in a decrease in the machinability of the steel. Therefore, even in a case where Mg is contained, the upper limit of the Mg content is set to 0.0100%. A preferable upper limit of the Mg content is 0.0080%, and a more preferable upper limit thereof is 0.0060%.

### (Zr: 0% to 0.0500%)

Zr is a deoxidizing element and bonds to O to form oxides. Zr-based oxides formed by Zr tend to be a nucleus of crystallization and/or precipitation of MnS. Therefore, Zr is an element effective in controlling the dispersion of MnS and improving the machinability of the steel. In a case of obtaining these effects, a preferable lower limit of the Zr content is 0.0005%, and a more preferable lower limit thereof is 0.0010%. On the other hand, when the Zr content exceeds 0.0500%, the effect is saturated. Therefore, even in a case where Zr is contained, the upper limit of the Zr content is set to 0.0500%. A preferable upper limit of the Zr content is 0.0400%, and a more preferable upper limit thereof is 0.0300%.

### (Te: 0.1000% or Less)

Te is an element which promotes the spheroidizing of MnS and improves the machinability of steel. In a case of obtaining this effect, a preferable lower limit of the Te content is 0.0005%, and a more preferable lower limit thereof is 0.0010%. On the other hand, when the Te content exceeds 0.1000%, the effect is saturated. Therefore, even in a case where Te is contained, the upper limit of the Te content is set to 0.1000%. A preferable upper limit of the Te content is 0.0800%, and a more preferable upper limit thereof is 0.0600%.

### (Rare Earth Metals: 0% to 0.0050%)

Rare earth metals (REM) produce sulfides in steel. The sulfides become a nucleus of precipitation of MnS and thus promote the production of MnS, thereby improving the machinability of the steel. In a case of obtaining this effect, the total amount of the rare earth metals is preferably 0.0005%, and more preferably 0.0010%. On the other hand, when the total amount of the rare earth metals exceeds 0.0050%, the sulfides become coarse and decrease the fatigue strength of the steel. Therefore, even in a case where the rare earth metals are contained, the upper limit of the total amount of the rare earth metals is set to 0.0050%. A preferable upper limit of the total amount of the rare earth metals is 0.0040%, and a more preferable upper limit thereof is 0.0030%.

In this embodiment, the rare earth metals collectively refer to 17 elements including 15 elements from lanthanum (La) with atomic number 57 in the periodic table to lutetium (Lu) with atomic number 71, yttrium (Y), and scandium (Sc). The amount of the rare earth metals means the total amount of one or two or more of these elements.

The base metal of the case-hardened steel component according to this embodiment contains the above-described alloying components and contains Fe and impurities as the remainder. Incorporation of elements other than the above-mentioned alloying components into the steel from the raw materials and manufacturing equipment as impurities is acceptable as long as the mixing amount thereof is at a level that does not affect the properties of the steel.

### (Carburized Layer)

The case-hardened steel component according to this embodiment includes the carburized layer formed on the surface part by the gas carburizing. In this embodiment, the carburized layer represents a region in which the C content is larger than that of the base metal and the C content is 0.60% or more. The gas carburizing mentioned in this embodiment is carburizing using an endothermic gas generated by mixing a gas such as propane with air, and the atmosphere during the gas carburizing contains N₂. This gas carburizing does not include gas carbonitriding in which NH₃ is introduced into the atmosphere.

The depth (effective case depth) of the carburized layer is preferably at least 0.5 mm or more, more preferably 1.0 mm or more, and for example, about 1.0 mm.

### (Number Density of Ti-Based Precipitates Having Equivalent Circle Diameter of 5 to 50 nm: 0.5 pieces/µm² or More in Region from Surface to Depth of 0.1 mm)

As shown in FIG. 1, in the carburized layer 1 of the case-hardened steel component according to this embodiment, fine Ti-based precipitates 2 having an equivalent circle diameter of 5 to 50 nm are dispersed. In this embodiment, the Ti-based precipitates mean precipitates (including complex precipitates) primarily containing Ti, such as TiC, (Ti,Nb)(C,N), TiN, and Ti₄C₂S₂. The Ti-based precipitates having an equivalent circle diameter of 5 to 50 nm exhibit the pinning effect at the time of phase transformation, and thus have a grain refining effect obtained after the phase transformation. The grain refining improves the impact value of the steel. In a case where the number density of the Ti-based precipitates having an equivalent circle diameter of 5 to 50 nm in the region from the surface to a depth of 0.1 mm is less than 0.5 pieces/µm², a case-hardened steel component having a sufficient impact value cannot be obtained.

Ti-based precipitates having an equivalent circle diameter of less than 5 nm do not affect the properties of the case-hardened steel component according to this embodiment and therefore may not be taken into consideration. Ti-based precipitates having an equivalent circle diameter of more than 50 nm (coarse Ti-based precipitates) do not have a grain refining effect, decrease the number density of the Ti-based precipitates having an equivalent circle diameter of 5 to 50 nm, and therefore may not be contained. However, as long as the Ti-based precipitates having an equivalent circle diameter of 5 to 50 nm are sufficiently obtained, the Ti-based precipitates having an equivalent circle diameter of more than 50 nm are allowed to be contained. Therefore, the number density of the Ti-based precipitates having an equivalent circle diameter of more than 50 nm may not be taken into consideration. In addition, since it is preferable that the number density of the Ti-based precipitates having an equivalent circle diameter of 5 to 50 nm is large, the upper limit of the number density of the Ti-based precipitates having an equivalent circle diameter of 5 to 50 nm is not particularly specified.

The number density of the Ti-based precipitates having an equivalent circle diameter of 5 to 50 nm contained in the region (surface region) from the surface to a depth of 0.1 mm can be measured, for example, by the following means. First, steel is cut perpendicular to the surface of the steel component. Next, samples with a region of 7 µm × 7 µm, which can be observed, are extracted by FIB processing from points at a depth of 0.02 mm, 0.05 mm, and 0.09 from the surface of the steel component, and thin film samples having a thickness of 100 nm or more and 300 nm or less are prepared. Thereafter, EDS analysis of phases other than Fe, which have an equivalent circle diameter of 5 to 50 nm, is performed on the sample at each depth position by observing the region of 7 µm × 7 µm at a magnification of 200,000-fold using a HAADF-STEM method with a field emission transmission electron microscope, and the number of phases where Ti is detected among the phases is counted. The value obtained by dividing the above-described number by the observation area was used as the number density of Ti-based precipitates at each depth position and the average of the values can be used as the number density of the Ti-based precipitates having an equivalent circle diameter of 5 to 50 nm contained in the region from the surface of the steel component to a depth of 0.1 mm.

### (Number Density of AlN Having Equivalent Circle Diameter of 50 nm or More and 100 nm or Less: 0.5 pieces/µm² or Less)

As described above, C and N are introduced into the steel during the temperature rising heating in the gas carburizing. In a case where the introduced N combines with Al solutionized in the steel and AlN is precipitated, AlN becomes coarse precipitates. In this case, the grains are not sufficiently refined and the toughness decreases. It is presumed that this is because AlN hinders the grain refining effect of Ti-based precipitates, particularly Ti-based precipitates primarily formed of Ti and N. In order to avoid a decrease in the toughness, coarse AlN having an equivalent circle diameter of 50 nm or more and 100 nm or less needs to be 0.5 pieces/µm² or less. This feature is obtained by limiting the Al content of the base metal of the steel (that is, the Al content of the steel before the carburizing treatment) to 0.010% or less and appropriately controlling the temperature rising rate during the carburizing.

AlN having an equivalent circle diameter of less than 50 nm does not affect the properties of the case-hardened steel component according to this embodiment and may not be taken into consideration. Also, it is better not to include AlN having an equivalent circle diameter of more than 100 nm. However, in a case where the number density of AlN having an equivalent circle diameter of 50 nm or more and 100 nm or less is appropriately controlled, AlN having an equivalent circle diameter of more than 100 nm is not substantially generated. Therefore, the number density of AlN having an equivalent circle diameter of more than 100 nm may not be taken into consideration. Since it is preferable that the number density of AlN having an equivalent circle diameter of 50 nm or more and 100 nm or less is small, the lower limit of the number density of AlN having an equivalent circle diameter of 50 nm or more and 100 nm or less is 0 pieces/µm².

The number density of AlN having an equivalent circle diameter of 50 to 100 nm contained in the region from the surface to a depth of 0.1 mm can be measured, for example, by the following means. First, steel is cut perpendicular to the surface of the steel component. Next, samples with a region of 7 µm × 7 µm, which can be observed, are extracted by FIB processing from points at depths of 0.02 mm, 0.05 mm, and 0.09 from the surface of the steel component, and thin film samples having a thickness of 100 nm or more and 300 nm or less are prepared. Thereafter, element mapping of Al and N of the thin film samples is performed on the sample at each depth position in a range of 7 µm × 7 µm using the field emission transmission electron microscope and EDS (energy dispersive X-ray analysis). In the place where AlN is precipitated, the number of Al and N detected is significantly higher than that in places where AlN is not precipitated. Therefore, a region where the number of Al and N detected is high is determined as AlN, and the number of AlN regions having an equivalent circle diameter of 50 nm or more and 100 nm or less is counted. By dividing the above-described number by the observation area, the number density of AlN having an equivalent circle diameter of 50 to 100 nm at each depth position is obtained. The average of the values can be used as the number density of AlN having an equivalent circle diameter of 50 to 100 nm contained in the region from the surface of the steel component to a depth of 0.1 mm.

Next, a preferable manufacturing method of the case-hardened steel component according to this embodiment will be described. The manufacturing method of the case-hardened steel component according to this embodiment includes a step of manufacturing a steel having the chemical composition of the base metal of the case-hardened steel component described above, a step of processing the steel, and a step of performing gas carburizing on the steel. The step of manufacturing the steel and the process of processing the steel are not particularly limited. However, in order to increase the production efficiency in the step of processing the steel, it is preferable to manufacture the steel so that the hardness of the steel before processing is low.

In the step of performing gas carburizing, gas carburizing is preferably performed under the following conditions.

### (Atmosphere of Gas Carburizing: Partial Pressure of N₂ Is 40% to 50%)

Gas carburizing performed in the manufacturing of the case-hardened steel component according to this embodiment is carburizing using an endothermic gas generated by mixing a gas such as propane with air, and the atmosphere during the gas carburizing contains N₂. This gas carburizing does not include gas carbonitriding in which NH₃ is introduced into the atmosphere or vacuum carburizing. The pressure of the atmosphere may be substantially the same as the atmospheric pressure. The partial pressure of N₂ in the atmosphere needs to be 40% to 50%. In a case where the partial pressure of N₂ is less than 40%, an insufficient amount of N is introduced into the steel, and grains cannot be refined by sufficiently producing Ti-based precipitates having an equivalent circle diameter of 5 to 50 nm. On the other hand, in a case where the partial pressure of N₂ exceeds 50%, N is excessively introduced into the steel, Ti-based precipitates become coarse, and the amount of Ti-based precipitates having an equivalent circle diameter of 5 to 50 nm is insufficient. Therefore, grains cannot be refined.

### (Temperature Rising Rate during Gas Carburizing: 5 °C/min to 50 °C/min in Temperature Range of 700°C to 800°C)

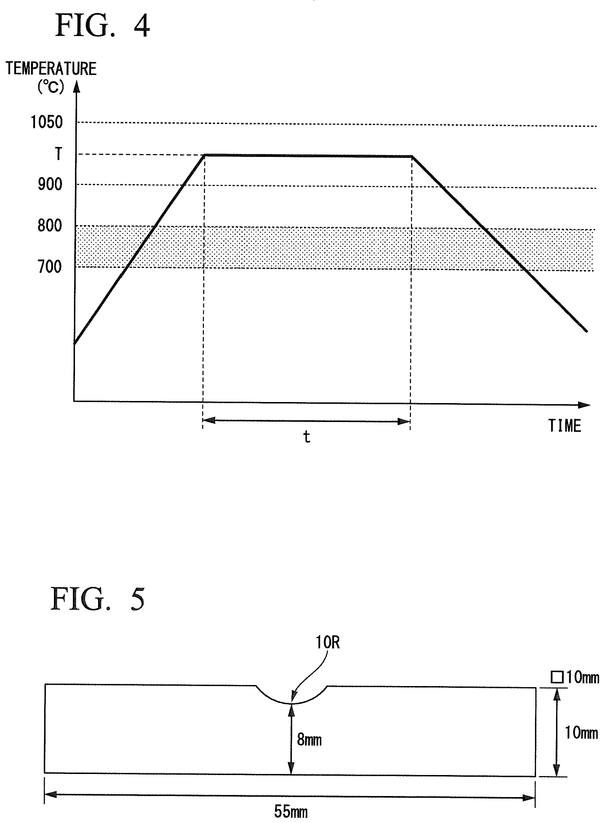

At the time of gas carburizing, as shown in FIG. 4, the steel (steel component material) is heated to a carburizing temperature, retained at a constant temperature in the carburizing temperature, and then cooled. In the temperature rising process during the gas carburizing, C and N₂ in the carburizing gas atmosphere are introduced into the steel, and at the same time, reverse transformation to γ occurs in the steel structure. The introduced C and N affect the precipitation of AlN, Ti-based precipitates, and the like, and thus affect the grain size. The amount of C and N introduced is affected by the temperature rising rate, and is mainly dominated by the average temperature rising rate in 700°C to 800°C where the reverse transformation to γ (austenite) occurs in particular. Therefore, in the gas carburizing including the manufacturing method of the case-hardened steel component according to this embodiment, it is necessary to strictly control the temperature rising rate in a temperature range of 700°C to 800°C (hatched range in FIG. 4).

Thereafter, during the temperature rising in the carburizing treatment, the temperature of the test piece is measured three times for every about 30°C within the temperature range of 700°C to 800°C, and the gradient obtained by applying the least squares method to the measured temperatures is defined as an "average temperature rising rate in a temperature range of 700°C to 800°C". In the manufacturing method of the case-hardened steel component according to this embodiment, in a case where the average temperature rising rate in the range of 700°C to 800°C is higher than 50 °C/min, the amount of C and N incorporated is reduced, and the effect of improving the impact value due to structure refining cannot be obtained. In a case where the average temperature rising rate in the range of 700°C to 800°C is lower than 5 °C/min, the grains become coarse and the effect of improving the impact value cannot be obtained. It is thought that this phenomenon occurs because the amount of C and N incorporated is so large that the Ti-based precipitates 2 become coarse as shown in FIG. 3 and the number density of the Ti-based precipitates having a grain size of 5 to 50 nm is insufficient. Therefore, the upper limit of the average temperature rising rate in the range of 700°C to 800°C during heating in the gas carburizing needs to be 50 °C/min, and the lower limit thereof needs to be 5 °C/min. A preferable upper limit of the average temperature rising rate is 40 °C/min, and a more preferable upper limit thereof is 35 °C/min. A preferable lower limit of the average temperature rising rate is 7 °C/min, and a more preferable lower limit thereof is 10 °C/min. The temperature rising rate during heating from room temperature to 700°C is not limited, and may be retained for preheating at less than 700°C.

### (Carburizing Temperature during Gas Carburizing: 900°C to 1050°C)

### (Retention Time during Gas Carburizing: 1 to 10 Hours)

A carburizing temperature T and a retention time t during the gas carburizing affect the thickness of the carburized layer, thereby affecting the impact value of the case-hardened steel component and the like. In the manufacturing method of the case-hardened steel component according to this embodiment, it is necessary to set the carburizing temperature T during the gas carburizing to 900°C to 1050°C, and it is necessary to set the retention time t to 1 to 10 hours. In a case where the carburizing temperature T is lower than 900°C or in a case where the retention time t is shorter than 1 hour, the carburized layer is not sufficiently formed and the hardness as the basic performance of the case-hardened steel component is insufficient. The carburized layer mentioned here is a region where the C content is larger than that of the base metal and the C content is 0.60% or more. On the other hand, in a case where the carburizing temperature T exceeds 1050°C, the damage to the refractory material in a carburizing furnace becomes significant and thus the gas carburizing treatment cannot be performed. In addition, when the retention time is prolonged, there is a concern that precipitates may grow and the grains may become coarse. However, in a case where the retention time is shorter than 10 hours, this problem is not seen. Therefore, the upper limit of the retention time may be 10 hours.

After performing the gas carburizing, it is preferable to perform tempering on the case-hardened steel component, for example, at a tempering temperature of 150°C for a tempering time of 90 minutes to ensure the toughness of the case-hardened steel component.

### [Examples]

Next, examples of the present invention will be described. The conditions in the examples are an example of conditions employed to confirm the applicability and effects of the present invention, and the present invention is not limited to the example of conditions. That is, the present invention can employ various conditions without departing from the gist of the present invention as long as the object of the present invention is achieved.

First, the contents of the examination conducted by the inventors to evaluate the impact resistance of a carburized material will be described below.

First, a steel for carburizing containing C: 0.20 mass%, Si: 0.24 mass%, Mn: 0.79 mass%, P: 0.020 mass%, S: 0.018 mass%, Cr: 1.06 mass%, Al: 0.032 mass%, N: 0.014 mass%, and O: 0.003 mass%, and Fe and impurities as the remainder was defined as a reference steel. Next, a Charpy impact test piece shown in FIG. 1, which had outer dimensions of 10 mm × 10 mm × 55 mm and had an arcuate notch (notch) having a radius of curvature of 10 mm and a depth of 2 mm was defined as a Charpy impact test piece in this embodiment. The Charpy impact test piece formed of the reference steel as its material was heated at a temperature rising rate of 20 °C/min in a range of 700°C to 800°C, was then subjected to gas carburizing under carburizing conditions (hereinafter, sometimes referred to as reference carburizing conditions) including a treatment temperature (carburizing temperature) of 930°C, a treatment time (retention time) of 2 hours, and a carbon potential of 0.8, and was further subjected to tempering at a tempering temperature of 150°C for a tempering time of 90 minutes. A Charpy impact test was conducted on the carburized material, and the absorbed energy thereof was defined as a reference impact value.

The above-mentioned reference steel is a steel having a chemical composition corresponding to SCr420, which is generally used as steel for a gear, and is the same as the steel of Test No. 15, which will be described later. The gas carburizing performed under the reference carburizing conditions described above is a general carburizing treatment performed to manufacture a component for machine structural use.

FIG. 5 shows the side surface shape (the shape of the cross section perpendicular to the extension direction of the notch) of the Charpy impact test piece described above. The radius of curvature of the notch is 10 mm and the depth of the notch is 2 mm. The shape of the Charpy impact test piece is different from the shape of a general Charpy impact test piece (for example, the shape defined in JIS-Z 2242 "Method for Charpy pendulum impact test of metallic materials"). The Charpy impact test piece shown in FIG. 5 simulates the root portion of a tooth of a gear and is intended to estimate the impact resistance of the root portion of the tooth when the steel as a test object is machined into the shape of the gear. As described in, for example, Japanese Unexamined Patent Application, First Publication No. 2013-40376, this Charpy impact test piece is widely used as the shape of a test piece for measuring the impact resistance of carburized steel. The Charpy absorbed energy was measured on the basis of JIS-Z 2242 "Method for Charpy pendulum impact test of metallic materials" except for the shape of the Charpy impact test piece. The temperature at which the Charpy impact test was conducted was set to 25°C. The Charpy impact test piece was prepared by machining.

Furthermore, the value obtained by dividing the Charpy absorbed energy at 25°C of the carburized material obtained by performing carburizing and tempering on the Charpy impact test pieces manufactured under various conditions by the reference impact value was defined as an impact value ratio under the conditions.

Since a case-hardened steel component having an impact value ratio of 1.20 or more has sufficiently improved impact resistance, by applying the case-hardened steel component having an impact value ratio of 1.20 or more, the design of a component can be changed to ensure impact fracture resistance while suppressing the amount of materials used. In the technical field of the machine structural component, it is considered that in order to implement such design changes, the impact value needs to be improved by 20% with respect to the reference impact value described above (the impact value of SCr420 carburized under general carburizing conditions). Therefore, in the present invention, it was determined that when the impact value ratio was 1.20 or more, the impact resistance was excellent.

Based on the above-described method, the inventors manufactured test pieces simulating the case-hardened steel component under various conditions and evaluated the impact resistance.

Specifically, first, various steel ingots having chemical compositions shown in Tables 1 and 2 were hot-forged to a diameter of 35 mm. The heating temperature of the hot forging was 1250°C. Thereafter, the steel ingots were retained at 950°C for 2 hours, thereafter subjected to a normalizing treatment under air cooling conditions, and machined into the shape of the Charpy impact test piece, shown in Table 1, having outer dimensions of 10 mm × 10 mm × 55 mm and an arcuate notch having a radius of curvature of 10 mm and a depth of 2 mm. The shape of this test piece is the same as that of the Charpy impact test piece shown in FIG. 5. Next, this Charpy impact test piece was subjected to a carburizing treatment. In the carburizing treatment, heating to 930°C at a temperature rising rate shown in Table 3 was performed. Regarding the temperature rising rate, the temperature of the test piece was measured three times using a radiation-type thermometer in a range of 700°C to 800°C during the temperature rising, and the gradient obtained by the least squares method was used as the temperature rising rate. The carbon potential was set to 0.8, and after retention at a carburizing temperature for 2 hours, quenching was performed in an oil at 130°C. Tempering was performed under conditions including a tempering temperature of 150°C and a tempering time of 90 minutes. After the tempering, a Charpy impact test was conducted to measure the Charpy absorbed energy (impact value). The Charpy impact test was conducted according to the method defined in JIS-Z 2242 except for the shape of the notch of the Charpy impact test piece. The test temperature was set to 25°C.

Furthermore, by dividing the impact value of each sample by the impact value of Test No. 15, the impact value ratio of each sample was calculated. The steel of Test No. 15 is the above-mentioned reference steel.

In addition, using the test piece after the Charpy impact test, the number of precipitated AlN from the surface of each sample to a depth of 0.1 mm was measured. The measurement method is as follows. First, in order to obtain the cross section of the notch bottom, the test piece was cut in a cross section which was perpendicular to the notch while including the longitudinal direction. Next, from depths of 0.02 mm, 0.05 mm, and 0.09 mm from the surface of the notch bottom, samples where a region of 7 µm × 7 µm could be observed were extracted by FIB processing, and thin film samples having a thickness of 100 nm or more and 300 nm or less were prepared. Thereafter, element mapping of Al and N of the thin film samples was performed in a range of 7 µm × 7 µm using a field emission transmission electron microscope and EDS (energy dispersive X-ray analysis). In the place where AlN was precipitated, the number of Al and N detected was significantly higher than that in places where AlN was not precipitated. Therefore, a region where the number of Al and N detected is high was determined as AlN, and the number of AlN regions having an equivalent circle diameter of 50 nm or more and 100 nm or less was counted. By dividing the number by the observation area, the number density of AlN at each depth position was obtained. By averaging the values, the number density of AlN included in the region from the surface to a depth of 0.1 mm was obtained.

Using the test piece after the Charpy impact test, the number density of Ti-based precipitates having an equivalent circle diameter of 5 to 50 nm contained in the region from the surface of the sample to a depth of 0.1 mm was measured. The measurement method is as follows. First, in order to obtain the cross section of the notch bottom, the test piece was cut in a cross section which was perpendicular to the notch while including the longitudinal direction. Next, from points at depths of 0.02 mm, 0.05 mm, and 0.09 mm from the surface of the notch bottom, samples where a region of 7 µm × 7 µm could be observed were extracted by FIB processing, and thin film samples having a thickness of 100 nm or more and 300 nm or less were prepared. Thereafter, EDS analysis of phases other than Fe, which had an equivalent circle diameter of 5 to 50 nm, was performed by observing the region of 7 µm × 7 µm at a magnification of 200,000-fold using a HAADF-STEM method with the field emission transmission electron microscope, and the number of phases where Ti was detected among the phases was counted. The value obtained by dividing the above-described number by the observation area was used as the number density of Ti-based precipitates having an equivalent circle diameter of 5 to 50 nm at each depth position and the average of the values was used as the number density of the Ti-based precipitates having an equivalent circle diameter of 5 to 50 nm contained in the region from the surface to a depth of 0.1 mm.

Using the test piece after the Charpy impact test, the grain size of prior austenite grains at a position 0.05 mm from the surface was measured. Specifically, the prior austenite grain boundaries were revealed by using a corrosive liquid containing picric acid and hydrochloric acid with respect to the cross section of the notch bottom described above, and according to the comparison method defined in JIS-G 0551, the grain sizes of five points were obtained. By averaging the grain sizes, the grain size of the prior austenite grains was evaluated.

In order to evaluate the hot ductility of the steel ingot, a test piece having a diameter of 10 mm and a length of 120 mm was cut out from the steel ingot. This test piece was heated to 1350°C in a vacuum atmosphere of 10⁻¹ to 10⁻² Pa through electric heating, retained for 1 minute, and then cooled to 800°C at 1 °C/s. After conducting a tensile test at a strain rate of 0.005 s⁻¹, the diameter of the final fractured portion was measured, a reduction in the area was calculated, and this was used as an index of hot ductility. A sample having a hot ductility of 50% or more was determined to have good hot ductility.

Table 3 shows the hot ductility of each sample, the amount of surface layer AlN after carburizing (that is, the number density of AlN contained in the region from the surface to a depth of 0.1 mm), the amount of the surface layer Ti-based precipitates after carburizing (that is, the number density of the Ti-based precipitates contained in the region from the surface to a depth of 0.1 mm), the grain size, and the impact value ratio.

**[Table 1]**

| Steel No. | Composition (mass%) * The remainder includes Fe and impurities. | | | | | | | | | | | |
|---|---|---|---|---|---|---|---|---|---|---|---|---|
| | C | Si | Mn | P | S | Cr | O | N | Ti | Nb | B | Al |
| 1 | 0.21 | 0.10 | 1.12 | 0.020 | 0.015 | 1.10 | 0.002 | 0.005 | 0.035 | 0.028 | 0.0019 | 0.004 |
| 2 | 0.27 | 0.21 | 0.41 | 0.014 | 0.025 | 1.78 | 0.002 | 0.009 | 0.170 | 0.011 | 0.0026 | 0.002 |
| 3 | 0.16 | 0.32 | 0.85 | 0.005 | 0.043 | 1.03 | 0.001 | 0.003 | 0.020 | 0.023 | 0.0020 | 0.006 |
| 4 | 0.20 | 0.31 | 0.50 | 0.012 | 0.021 | 1.59 | 0.002 | 0.005 | 0.152 | 0.013 | 0.0015 | 0.005 |
| 5 | 0.22 | 0.32 | 0.75 | 0.014 | 0.013 | 1.13 | 0.001 | 0.006 | 0.046 | 0.030 | 0.0025 | 0.004 |
| 6 | 0.20 | 0.15 | 1.45 | 0.014 | 0.015 | 0.32 | 0.001 | 0.006 | 0.035 | 0.025 | 0.0020 | 0.006 |
| 7 | 0.21 | 0.23 | 0.65 | 0.013 | 0.011 | 1.21 | 0.001 | 0.005 | 0.060 | 0.018 | 0.0032 | 0.005 |
| 8 | 0.20 | 0.28 | 0.82 | 0.017 | 0.013 | 1.08 | 0.001 | 0.005 | 0.039 | 0.030 | 0.0020 | 0.005 |
| 9 | 0.22 | 0.20 | 0.38 | 0.013 | 0.015 | 1.83 | 0.002 | 0.004 | 0.049 | 0.025 | 0.0017 | 0.004 |
| 10 | 0.22 | 0.26 | 0.71 | 0.012 | 0.018 | 1.37 | 0.001 | 0.005 | 0.045 | 0.031 | 0.0023 | 0.008 |
| 11 | 0.23 | 0.19 | 0.55 | 0.013 | 0.015 | 1.45 | 0.002 | 0.006 | 0.031 | 0.031 | 0.0019 | 0.004 |
| 12 | 0.21 | 0.25 | 0.63 | 0.010 | 0.013 | 1.22 | 0.001 | 0.004 | 0.038 | 0.032 | 0.0015 | 0.005 |
| 13 | 0.19 | 0.23 | 0.82 | 0.015 | 0.014 | 0.99 | 0.002 | 0.006 | 0.033 | 0.015 | 0.0025 | 0.003 |
| 14 | 0.16 | 0.15 | 0.43 | 0.015 | 0.013 | 2.11 | 0.001 | 0.007 | 0.051 | 0.015 | 0.0021 | 0.007 |
| 15 | 0.20 | 0.24 | 0.79 | 0.020 | 0.018 | 1.06 | 0.003 | 0.014 | - | - | - | 0.032 |
| 16 | 0.21 | 0.21 | 0.45 | 0.020 | 0.020 | 0.96 | 0.003 | 0.008 | 0.031 | 0.015 | 0.0013 | 0.030 |
| 17 | 0.19 | 0.25 | 0.66 | 0.015 | 0.013 | 1.22 | 0.001 | 0.006 | 0.025 | 0.015 | 0.0025 | 0.011 |
| 18 | 0.19 | 0.25 | 0.70 | 0.023 | 0.022 | 1.10 | 0.002 | 0.008 | 0.012 | 0.031 | 0.0020 | 0.005 |
| 19 | 0.21 | 0.20 | 0.75 | 0.019 | 0.019 | 1.05 | 0.002 | 0.009 | 0.018 | 0.009 | 0.0019 | 0.006 |
| 20 | 0.21 | 0.34 | 0.52 | 0.012 | 0.023 | 1.61 | 0.002 | 0.005 | 0.145 | 0.013 | - | 0.005 |
| 21 | 0.24 | 1.23 | 0.35 | 0.014 | 0.015 | 1.32 | 0.002 | 0.009 | 0.160 | 0.012 | 0.0022 | 0.003 |

**[Table 2]**

| Steel No. | Composition (mass%) * The remainder includes Fe and impurities. | | | | | | | | | | | |
|---|---|---|---|---|---|---|---|---|---|---|---|---|
| | Ni | Mo | Cu | Co | W | V | Pb | Ca | Mg | Zr | Te | Rare earth metal |
| 1 | - | - | - | - | - | - | - | - | - | - | - | - |
| 2 | - | - | - | - | - | - | - | - | - | - | - | - |
| 3 | 1.61 | - | - | - | - | - | - | - | - | - | - | - |
| 4 | - | 0.29 | - | - | - | - | - | - | - | - | - | - |
| 5 | - | - | 0.20 | - | - | - | - | - | - | - | - | - |
| 6 | - | - | - | 0.22 | - | - | - | - | - | - | - | - |
| 7 | - | - | - | - | 0.31 | - | - | - | - | - | - | - |
| 8 | - | - | - | - | - | 0.11 | - | - | - | - | - | - |
| 9 | - | - | - | - | - | - | 0.05 | - | - | - | - | - |
| 10 | - | - | - | - | - | - | - | 0.0012 | - | - | - | - |
| 11 | - | - | - | - | - | - | - | - | 0.0011 | - | - | - |
| 12 | - | - | - | - | - | - | - | - | - | 0.0021 | - | - |
| 13 | - | - | - | - | - | - | - | - | - | - | 0.0010 | - |
| 14 | - | - | - | - | - | - | - | - | - | - | - | 0.0031 |
| 15 | - | - | - | - | - | - | - | - | - | - | - | - |
| 16 | - | - | - | - | - | - | - | - | - | - | - | - |
| 17 | - | - | - | - | - | - | - | - | - | - | - | - |
| 18 | - | - | - | - | - | - | - | - | - | - | - | - |
| 19 | - | - | - | - | - | - | - | - | - | - | - | - |
| 20 | - | - | - | - | - | - | - | - | - | - | - | - |
| 21 | - | - | - | - | - | - | - | - | - | - | - | - |

**[Table 3]**

| Test No. | Steel No. | Classification | Hot ductility | Temperature rising rate (°C/min) | Amount of surface layer AlN after carburizing (pieces/µm²) | Amount of surface layer Ti-based precipitates after carburizing (pieces/µm²) | Grain size | Impact value ratio |
|---|---|---|---|---|---|---|---|---|
| 1 | 1 | Invention Example | 50% or more | 20 | 0.0 | 2.5 | 9.4 | 1.28 |
| 2 | 2 | | 50% or more | 45 | 0.0 | 10.0 | 9.7 | 1.32 |
| 3 | 3 | | 50% or more | 20 | 0.1 | 1.1 | 9.1 | 1.25 |
| 4 | 4 | | 50% or more | 20 | 0.1 | 3.4 | 9.9 | 1.31 |
| 5 | 5 | | 50% or more | 10 | 0.1 | 4.7 | 9.6 | 1.31 |
| 6 | 6 | | 50% or more | 20 | 0.1 | 1.5 | 9.3 | 1.28 |
| 7 | 7 | | 50% or more | 20 | 0.1 | 2.7 | 9.5 | 1.30 |
| 8 | 8 | | 50% or more | 20 | 0.1 | 1.8 | 9.5 | 1.29 |
| 9 | 9 | | 50% or more | 20 | 0.0 | 3.8 | 9.5 | 1.29 |
| 10 | 10 | | 50% or more | 15 | 0.2 | 3.6 | 9.6 | 1.31 |
| 11 | 11 | | 50% or more | 20 | 0.0 | 2.0 | 9.4 | 1.28 |
| 12 | 12 | | 50% or more | 15 | 0.1 | 3.3 | 9.5 | 1.29 |
| 13 | 13 | | 50% or more | 20 | 0.0 | 3.1 | 9.0 | 1.25 |
| 14 | 14 | | 50% or more | 30 | 0.0 | 2.5 | 9.1 | 1.26 |
| 23 | 21 | | 50% or more | 45 | 0.0 | 8.3 | 9.5 | 1.30 |
| 15 | 15 | Comparative Example | 50% or more | 20 | 2.0 | 0.0 | 7.2 | 1.00 |
| 16 | 16 | | 50% or more | 20 | 1.8 | 3.5 | 8.1 | 1.08 |
| 17 | 17 | | 50% or more | 25 | 0.6 | 3.6 | 7.3 | 1.15 |
| 18 | 18 | | 30% | 20 | 0.1 | 0.0 | 7.5 | 1.10 |
| 19 | 19 | | 50% or more | 35 | 0.0 | 0.0 | 6.7 | 0.98 |
| 20 | 13 | | 50% or more | 1 | 7.2 | 2.6 | 6.5 | 0.96 |
| 21 | 13 | | 50% or more | 60 | 0.0 | 0.4 | 6.5 | 1.01 |
| 22 | 20 | | 50% or more | 20 | 0.1 | 3.4 | 9.8 | 1.10 |

In Test Nos. 1 to 14 and 23, which are invention examples, in the surface region, the number densities of AlN and Ti-based precipitates having predetermined sizes were in appropriate ranges, the grains were refined, and thus good impact resistance was provided. In addition, the hot ductility was also good.

Contrary to this, Test Nos. 15 to 22 as comparative examples did not have preferable properties.

In Test No. 15, the Al content and the N content of the base metal were excessive, and AlN precipitated excessively during carburizing heating. Furthermore, since Test No. 15 did not contain Ti and Nb, Ti-based precipitates were not generated. Moreover, Test No. 15 did not contain B. Accordingly, Test No. 15 had a lower impact value than those of the examples. In Test Nos. 16 and 17, the Al content of the base metal was excessive and AlN precipitated excessively during carburizing heating. Therefore, the impact values thereof were lower than those of the examples.

In Test No. 18, since the Ti content of the base metal was insufficient, a reduction in hot ductility due to Nb was not suppressed, and only low manufacturability was achieved, which was inappropriate. In addition, in Test No. 18, since the Ti content of the base metal was insufficient, Ti-based precipitates were not generated, and grains became coarse. Therefore, the impact value was lower than those of the examples.

In Test No. 19, although Ti was deficient, the Nb content was small. Therefore, a reduction in hot ductility did not occur. However, in Test No. 19, Ti-based precipitates were not generated due to the deficiency of Ti and grains became coarse. Therefore, the impact value was lower than those of the examples.

In Test No. 20, since the temperature rising rate during carburizing was insufficient and the amount of precipitated AlN increased, grains became coarse, and the impact value was lower than those of the examples.

In Test No. 21, since the temperature rising rate during carburizing was too high, the amount of N introduced during temperature rising was small, the amount of Ti-based precipitates was small. As a result, grains became enlarged, and the impact value was lower than those of the examples.

Test No. 22 did not contain B. Accordingly, Test No. 22 had a lower impact value than those of the examples.

### [Industrial Applicability]

According to the present invention, it is possible to provide a case-hardened steel component having excellent impact resistance. The case-hardened steel component causes a reduction in the amount of materials used for a component for machine structural use and contributes to a reduction in the weight the component for machine structural use. Therefore, the industrial effect of the present invention is extremely large.

### [Brief Description of the Reference Symbols]

- 1:: CARBURIZED LAYER
- 2:: Ti-BASED PRECIPITATE
- 3:: COARSE AlN

## Claims

1. A case-hardened steel component comprising:
a base metal; and
a carburized layer,
wherein a chemical composition of the base metal includes, by mass%,
C: 0.16% to 0.30%,
Si: 0.10% to 2.00%,
Mn: 0.30% to 2.00%,
Cr: 0.20% to 3.00%,
S: 0.001% to 0.100%,
N: 0.003% to 0.010%,
Ti: 0.020% to 0.200%,
Nb: 0.010% or more and less than 0.050%,
B: 0.0005% to 0.0050%,
Ni: 0% to 3.00%,
Mo: 0% to 0.80%,
Cu: 0% to 1.00%,
Co: 0% to 3.00%,
W: 0% to 1.00%,
V: 0% to 0.30%,
Pb: 0% to 0.50%,
Ca: 0% to 0.0100%,
Mg: 0% to 0.0100%,
Zr: 0% to 0.0500%,
Te: 0% to 0.1000%,
a rare earth metal: 0% to 0.0050%,
Al: limited to 0.010% or less,
O: limited to 0.0050% or less,
P: limited to 0.025% or less, and
Fe and impurities as a remainder,
a number density of Ti-based precipitates having an equivalent circle diameter of 5 to 50 nm in a surface region from a surface to a depth of 0.1 mm is 0.5 pieces/µm² or more, and
in the surface region, a number density of AlN having an equivalent circle diameter of 50 nm or more and 100 nm or less is 0.5 pieces/µm² or less.

2. The case-hardened steel component according to claim 1,
wherein the chemical composition of the base metal includes, by mass%, one or two or more selected from the group consisting of
Ni: 0.20% or more and 3.00% or less,
Mo: 0.05% or more and 0.80% or less,
Cu: 0.05% or more and 1.00% or less,
Co: 0.05% or more and 3.00% or less,
W: 0.05% or more and 1.00% or less, and
V: 0.10% or more and 0.30% or less.

3. The case-hardened steel component according to claim 1 or 2,
wherein the chemical composition of the base metal includes, by mass%, one or two or more selected from the group consisting of
Pb: 0.05% or more and 0.50% or less,
Ca: 0.0003% or more and 0.0100% or less,
Mg: 0.0005% or more and 0.0100% or less,
Zr: 0.0005% or more and 0.0500% or less,
Te: 0.0005% or more and 0.1000% or less, and
a rare earth metal: 0.0005% or more and 0.0050% or less.

## Patentansprüche

1. Ein einsatzgehärtetes Stahlkomponente, umfassend:
ein Basismetall; und
eine aufgekohlte Schicht,
wobei eine chemische Zusammensetzung des Basismetalls, in Massen-%
C: 0,16% bis 0,30%,
Si: 0,10% bis 2,00%,
Mn: 0,30% bis 2,00%,
Cr: 0,20% bis 3,00%,
S: 0,001% bis 0,100%,
N: 0,003% bis 0,010%,
Ti: 0,020% bis 0,200%,
Nb: 0,010% oder mehr und weniger als 0,050%,
B: 0,0005% bis 0,0050%,
Ni: 0% bis 3,00%,
Mo: 0% bis 0,80%,
Cu: 0% bis 1,00%,
Co: 0% bis 3,00%;
W: 0% bis 1,00%,
V: 0% bis 0,30%,
Pb: 0% bis 0,50%,
Ca: 0% bis 0,0100%,
Mg: 0% bis 0,0100%,
Zr: 0% bis 0,0500%,
Te: 0% bis 0,1000%,
ein Seltenerdmetall: 0% bis 0,0050%,
Al: begrenzt auf 0,010% oder weniger,
O: begrenzt auf 0,0050% oder weniger,
P: begrenzt auf 0,025% oder weniger, und
Fe und Verunreinigungen als einen Rest einschließt,
wobei eine Anzahldichte an Ausfällungen auf Ti-Basis mit einem äquivalenten Kreisdurchmesser von 5 bis 50 nm in einem Oberflächenbereich von einer Oberfläche bis zu einer Tiefe von 0,1 mm 0,5 Stücke/(µm² oder mehr beträgt, und
in dem Oberflächenbereich eine Anzahlzahldichte an AlN mit einem äquivalenten Kreisdurchmesser von 50 nm oder mehr und 100 nm oder weniger 0,5 Stücke/µm² oder weniger beträgt.

2. Das einsatzgehärtete Stahlkomponente gemäß Anspruch 1,
wobei die chemische Zusammensetzung des Basismetalls, in Massen-%, eines oder zwei oder mehrere einschließt, die ausgewählt sind aus der Gruppe bestehend aus
Ni: 0,20% oder mehr und 3,00% oder weniger,
Mo: 0,05% oder mehr und 0,80% oder weniger,
Cu: 0,05% oder mehr und 1,00% oder weniger,
Co: 0,05% oder mehr und 3,00% oder weniger,
W: 0,05% oder mehr und 1,00% oder weniger, und
V: 0,10% oder mehr und 0,30% oder weniger.

3. Das einsatzgehärtete Stahlkomponente gemäß Anspruch 1 oder 2,
wobei die chemische Zusammensetzung des Basismetalls, in Massen-%, eines oder zwei oder mehrere einschließt, die ausgewählt sind aus der Gruppe bestehend aus
Pb: 0,05% oder mehr und 0,50% oder weniger,
Ca: 0,0003% oder mehr und 0,0100% oder weniger,
Mg: 0,0005% oder mehr und 0,0100% oder weniger,
Zr: 0,0005% oder mehr und 0,0500% oder weniger,
Te: 0,0005% oder mehr und 0,1000% oder weniger, und
einem Seltenerdmetall: 0,0005% oder mehr und 0,0050% oder weniger.

## Revendications

1. Constituant en acier cémenté comprenant :
un métal de base ; et
une couche carburée,
dans lequel une composition chimique du métal de base inclut, en % en masse,
C : 0,16 % à 0,30 %,
Si : 0,10 % à 2,00 %,
Mn : 0,30 % à 2,00 %,
Cr : 0,20 % à 3,00 %,
S : 0,001 % à 0,100 %,
N : 0,003 % à 0,010 %,
Ti : 0,020 % à 0,200 %,
Nb : 0,010 % ou supérieur et inférieur à 0,050 %,
B : 0,0005 % à 0,0050 %,
Ni : 0 % à 3,00 %,
Mo : 0 % à 0,80 %,
Cu : 0 % à 1,00 %,
Co : 0 % à 3,00 %,
W : 0 % à 1,00 %,
V : 0 % à 0,30 %,
Pb : 0 % à 0,50 %,
Ca : 0 % à 0,0100 %,
Mg : 0 % à 0,0100 %,
Zr : 0 % à 0,0500 %,
Te : 0 % à 0,1000 %,
un métal de terre rare : 0 % à 0,050 %,
Al : limité à 0,010 % ou inférieur,
O : limité à 0,0050 % ou inférieur,
P : limité à 0,025 % ou inférieur, et
Fe et des impuretés comme un reste,
une densité en nombre de précipités à base de Ti présentant un diamètre de cercle équivalent de 5 à 50 nm dans une région de surface à partir d'une surface jusqu'à une profondeur de 0,1 mm est de 0,5 pièce/µm² ou supérieure, et
dans la région de surface, une densité en nombre de AlN présentant un diamètre de cercle équivalent de 50 nm ou supérieur et de 100 nm ou inférieur est de 0,5 pièce/µm² ou inférieure.

2. Constituant d'acier cémenté selon la revendication 1,
dans lequel la composition chimique du métal de base inclut, en % en masse, un ou deux ou plusieurs choisis dans le groupe consistant en
Ni : 0,20 % ou supérieur et 3,00 % ou inférieur,
Mo : 0,05 % ou supérieur et 0,80 % ou inférieur,
Cu : 0,05 % ou supérieur et 1,00 % ou inférieur, S Co : 0,05 % ou supérieur et 3,00 % ou inférieur,
W : 0,05 % ou supérieur et 1,00 % ou inférieur, et
V : 0,10 % ou supérieur et 0,30 % ou inférieur.

3. Constituant d'acier cémenté selon la revendication 1 ou 2,
dans lequel la composition chimique du métal de base inclut, en % en masse, un ou deux ou plusieurs choisis dans le groupe consistant en
Pb : 0,05 % ou supérieur et 0,50 % ou inférieur,
Ca : 0,0003 % ou supérieur et 0,0100 % ou inférieur,
Mg : 0,0005 % ou supérieur et 0,0100 % ou inférieur,
Zr : 0,0005 % ou supérieur et 0,0500 % ou inférieur,
Te : 0,0005 % ou supérieur et 0,1000 % ou inférieur, et
un métal de terre rare : 0,0005 % ou supérieur et 0,0050 % ou inférieur.
